# EUROPÄISCHE PATENTSCHRIFT

(11) **EP 3 899 570 B1**
(45) Veröffentlichungstag und Bekanntmachung des Hinweises auf die Patenterteilung: **25.02.2026**
(21) Anmeldenummer: 19832685.2
(22) Anmeldetag: 20.12.2019
(51) Int. Cl.: G01S 7/40, G01S 7/497, G01S 13/931, G01S 17/931

(54) **PRÜFSTAND ZUM TEST EINES MIT ELEKTROMAGNETISCHEN WELLEN ARBEITENDEN ABSTANDSSENSORS**
TEST STAND FOR TESTING A DISTANCE SENSOR WHICH OPERATES USING ELECTROMAGNETIC WAVES
BANC D'ESSAI PERMETTANT DE TESTER UN CAPTEUR DE DISTANCE À ONDES ÉLECTROMAGNÉTIQUES

(30) Priorität: 21.12.2018 DE 102018133521
(43) Veröffentlichungstag der Anmeldung: 27.10.2021
(73) Patentinhaber: dSPACE GmbH, 33102 Paderborn (DE)
(72) Erfinder: BERNECK, Dirk, 33106 Paderborn (DE); LOHOEFENER, Albrecht, 33098 Paderborn (DE); ANSELM, Vitali, 59590 Geseke (DE); ROZMANN, Michael, 82223 Eichenau (DE)
(74) Vertreter: Gesthuysen Patentanwälte
(86) Internationale Anmeldenummer: PCT/EP2019/086697
(87) Internationale Veröffentlichungsnummer: WO 2020/127984

(56) Entgegenhaltungen:
- EP-A1- 3 115 804
- WO-A1-99/27383
- WO-A2-2019/229047
- US-A1- 2013 002 474
- US-A1- 2018 100 783
- MICHAEL ROZMANN: "Echte Echos im Labor, Radartestplatz", DSPACE MAGAZIN, 2/2017, 1 December 2017 (2017-12-01), pages 48 - 51, XP055679028, Retrieved from the Internet <URL:https://www.dspace.com/shared/data/pdf/2017/10_Real%20Echoes%20in%20the%20Lab_de.pdf> [retrieved on 20200324]

## Beschreibung

Die Erfindung betrifft einen Prüfstand zum Test eines mit elektromagnetischen Wellen arbeitenden Abstandssensors gemäß dem Oberbegriff von Patentanspruch 1.

Die vorgenannten Prüfstände sind seit jüngerer Zeit aus dem Bereich der Steuergeräteentwicklung und des Steuergerätetests - beispielsweise im automotiven Bereich - bekannt. Ein häufiges Testszenario besteht hier darin, die Funktionalität eines Seriensteuergeräts mittels einer simulierten Umwelt zu testen. Dazu wird die Umwelt des Steuergeräts in Teilen oder auch vollständig mittels einer leistungsfähigen Simulationsumgebung in Echtzeit berechnet, wobei die Simulationsumgebung physikalische Signale, die die Eingangssignale des Steuergeräts sind, generiert und wobei die Simulationsumgebung die von dem Steuergerät generierten Ausgangssignale aufnimmt und mit in die Echtzeitsimulation einfließen lässt. Steuergeräte können so gefahrlos in einer simulierten Umgebung unter praktisch "echten" Bedingungen getestet werden. Wie realitätsnah der Test ist, hängt von der Güte der Simulationsumgebung und der darauf berechneten Simulation ab. Steuergeräte können so also im geschlossenen Regelkreis getestet, weshalb derartige Testszenarien auch als Hardware-in-the-Loop-Tests bezeichnet werden.

Im vorliegenden Fall geht es um den Test von Abstandssensoren, die mit elektromagnetischen Wellen arbeiten. Im automotiven Bereich werden ganz überwiegend Radarsensoren eingesetzt. Grundsätzlich können aber auch Abstandssensoren getestet werden, die in einem anderen Frequenzbereich elektromagnetischer Wellen arbeiten, beispielsweise im Bereich des sichtbaren Lichts, oder die mit elektromagnetischen Strahlungsquellen arbeiten, die elektromagnetische Wellen mit einer langen Kohärenzlänge emittieren, wie beispielsweise bei Laseranwendungen (zum Beispiel Lidar).

In modernen Fahrzeugen werden in zunehmendem Maße Abstandssensoren eingesetzt, um das Fahrzeug und dessen Assistenzsysteme mit Umgebungsinformationen zu versorgen. So werden Position, Geschwindigkeit und/oder Beschleunigung von Objekten in der Fahrzeugumgebung ermittelt - also Orts- und Bewegungsdaten -, mit manchen Abstandssensoren kann aber auch die Rückstrahlintensität und das Abstrahlbild eines Umgebungsobjektes erfasst werden, beispielsweise unter Berücksichtigung der Intensität der reflektierten Strahlung. Zu den Assistenzsystemen, die derartigen Umgebungsinformationen verwenden, gehören beispielsweise die adaptive Geschwindigkeitsregelung (adaptive cruise control, ACC) und das autonome Notfallbremssystem (autonomous emergency breaking, AEB). Es ist nachvollziehbar, dass der Test derartiger sicherheitsrelevanter Assistenzsysteme mit hoher Sorgfalt erfolgen muss, wobei auch das Ausbreitungsverhalten der elektromagnetischen Wellen möglichst realitätsnah zu berücksichtigen ist. Dies erfolgte in der Vergangenheit überwiegend durch sehr kostspielige und zeitaufwendige reale Fahrtests. Diese Fahrtests werden zunehmend ersetzt durch die eingangs beschriebenen Prüfstände zum Test eines Abstandssensors, in denen auch mit Freiraumwellen gearbeitet wird. Derartige Prüfstände werden auch OTA-Prüfstände genannt (over-the-air), in denen der zu testende Abstandssensor tatsächlich elektromagnetische Wellen in den Freiraum, also ungeführt abstrahlt und auch elektromagnetische Wellen aus dem Freiraum als simuliertes Reflexionssignal empfängt. Vorteil derartiger OTA-Prüfstände ist die weitreichende Überprüfung der gesamten Wirkkette im Zusammenhang mit dem zu testenden Abstandssensor, einschließlich des Abstrahl- und Empfangsverhaltens, an denen das Sensor-Abstrahlelement und das Sensor-Empfangselement beteiligt sind. Darüber hinaus kann der Einfluss der Einbausituation des zu testenden Abstandssensors überprüft werden, z. B. wie beeinflusst die Stoßstange die elektromagnetischen Wellen.

Aus den obigen Ausführungen ergibt sich, dass der Begriff "Abstandssensor" hier nicht derart einschränkend zu verstehen ist, dass er ausschließlich zur Abstandsbestimmung geeignet sein muss, es können mit ihm vielmehr auch Orts- und Bewegungsparameter und Rückstrahleigenschaften von Umgebungsobjekten ermittelt werden. Unabhängig davon, welche Art von elektromagnetischer Welle der zu testende Abstandssensor verwendet, werden bei dem Test von Abstandssensoren extrem hohe Anforderungen an die insgesamt auch erforderliche elektronische Signalverarbeitung gestellt, auch wenn es um die Signalverarbeitung in der vorliegenden Patentanmeldung nicht in erster Linie geht. Entfernungen eines Objekts in der Umgebung werden meist direkt über die Signallaufzeit ermittelt, die die abgestrahlten elektromagnetischen Wellen zu dem Objekt und von dem Objekt zurück zum Abstandssensor reflektiert, benötigt. Geschwindigkeiten von Objekten in der Umgebung werden über Frequenzverschiebungen zwischen der abgestrahlten elektromagnetischen Welle und der reflektierten elektromagnetischen Welle bestimmt (Dopplerverschiebung). Aufgrund der sich im Wesentlichen mit Lichtgeschwindigkeit ausbreitenden elektromagnetischen Wellen müssen hier sehr geringe Signallaufzeiten aufgelöst werden. Um beispielsweise eine Minimaldistanz von einem Meter erfassen zu können, müssen Signallaufzeiten im Nanosekundenbereich aufgelöst werden. Sollen größere Distanzen, also unabhängig von der Frage der Minimaldistanz, im Bereich von Zentimetern erfasst werden, müssen Laufzeitunterschiede auch im Sub-Nanosekundenbereich aufgelöst werden können.

In dem Prüfstand sollen die vom zu testenden Abstandssensor abgestrahlten elektromagnetischen Wellen tatsächlich nicht reflektiert werden, vielmehr werden die abgestrahlten elektromagnetischen Wellen von einem Prüfstand-Empfangselement empfangen und in einer nachgelagerten schnellen Signalverarbeitungselektronik, einem Reflexionssimulator, verarbeitet, nämlich laufzeitverzögert und gegebenenfalls frequenzverschoben. In Abhängigkeit von dem zu simulierenden Abstand zu einem simulierten Umfeldobjekt oder in Abhängigkeit von der Relativgeschwindigkeit des Umfeldobjektes zum zu testenden Abstandssensors werden entsprechend zeitverzögerte und/oder frequenzverschobene Signale in dem Reflexionssimulator erzeugt und als simuliertes - also nicht tatsächliches - Reflexionssignal über das Sensor-Abstrahlelement wieder in Richtung auf den zu testenden Abstandssensor emittiert. Je nach Ausstattung des Reflexionssimulators kann er auch Einfluss nehmen auf die Amplitude des Reflexionssignals, sodass auch die Größe eines Umgebungsobjektes nachgebildet werden kann. So entsteht beim Abstandssensor der Eindruck einer echten Umgebung mit gegebenenfalls auch mehreren unterschiedlich weit entfernten und unterschiedlich bewegten Objekten im simulierten Umfeld.

Im Stand der Technik sind verschiedene Arten von Prüfständen bekannt. Aus der US 2013/0002474 A1 ist ein Prüfstand für ein Artillerieaufklärungsradar bekannt, bei dem Objekte in einem zu überprüfenden Raumwinkel durch ein flächiges Antennenarray mit fest zueinander positionierten Antennen simuliert werden durch Ansteuern einzelner Antennen in dem Array. Nach einem ähnlichen Prinzip, das auf ortsfesten Antennen beruht, arbeitet der Prüfstand gemäß der EP 3 115 804 A1 wie auch gemäß der WO 99/27383 A1. Die US 2018/0100783 A1 offenbart einen Teststand, bei dem vor dem in einem Fahrzeug verbauten und zu testenden Abstandssensor ein Abstrahl- und Empfangselement horizontal und vertikal verstellbar angeordnet ist, um ein Objekt in verschiedenen Positionen zu simulieren.

Der aus dem Stand der Technik bekannte Prüfstand gemäß der Veröffentlichung "Echte Echos im Labor" (dSPACE Magazin 2/2017 aus Dezember 2017) zeichnet sich dadurch aus, dass der gesamten Kulisse, speziell in einem ortsfesten Teil der Kulisse, ein einziges Prüfstand-Empfangselement zum Empfangen eines vom Sensor-Abstrahlelement abgestrahlten Sendesignals angeordnet ist, also auch unabhängig davon, wie viele Objekte in einer Objektumgebung zu simulieren sind. In verschiedenen beweglichen Teilen der Kulisse sind dann aber mehrere Prüfstand-Abstrahlelemente angeordnet, wobei jedes Prüfstand-Abstrahlelement für ein zu simulierendes Objekt in der Objektumgebung verwendet wird.

Die aus dem Stand der Technik bekannten Prüfstand-Abstrahlelemente lassen sich separat azimutal auslenken, sodass also Objektpositionen "links" und "rechts" von der Abstrahlrichtung des zu testenden Abstandssensors simuliert werden können. Ein nachgeschalteter Reflexionssimulator verfügt über Informationen über die Entfernung und Bewegung der zu simulierenden Objekte im Objektraum, beispielsweise um mit angepassten Signalintensitäten der von den Prüfstand-Abstrahlelementen jeweils abgestrahlten simulierten Reflexionssignale zu reagieren, und um entsprechende Zeitverzögerungen und Frequenzverschiebungen einzustellen.

Erfindungsgemäß ist erkannt worden, dass Schwierigkeiten insbesondere dann auftreten, wenn zu testende Abstandssensoren nach dem MIMO-Prinzip (multiple input - multiple output) arbeiten. Diese neuartigen Abstandssensoren verfügen über mehrere Sensor-Abstrahlelemente und mehrere Sensor-Empfangselemente, die zu einem Array verschaltet sind und in Gänze ausgewertet werden können oder auch in variierender Kombination zusammen miteinander arbeiten. Dadurch sind derartige Abstandssensoren in der Lage, eine Richtungsabschätzung durch Auswertung des Echosignals durchzuführen. Mit dem aus dem Stand der Technik bekannten Prüfstand ist eine zuverlässige Umgebungssimulation für einen solchen Abstandssensor nur mit Einschränkungen möglich, der zu testende Abstandssensor kann unter Umständen in Fehlersituationen gelangen.

Aufgabe der Erfindung ist es daher, einen Prüfstand anzugeben, mit dem eine höhere Zuverlässigkeit auch beim Test von auf dem MIMO-Prinzip arbeitenden Abstandssensoren erzielt wird.

Die zuvor hergeleitete Aufgabe ist bei dem eingangs beschriebenen Prüfstand zum Test eines mit elektromagnetischen Wellen arbeitenden Abstandssensors gelöst durch die Merkmale des Kennzeichnungsteils von Patentanspruch 1. Erfindungsgemäß ist also vorgesehen, dass wenigstens ein Prüfstand-Empfangselement und ein Prüfstand-Abstrahlelement gemeinsam in einem beweglichen Teil der Kulisse angeordnet sind. Dadurch ist gewährleistet, dass die in ein und demselben beweglichen Teil der Kulisse angeordneten Empfangs- und Abstrahlelemente des Prüfstandes gemeinsam ausgelenkt werden und so eine vergleichbare Position relativ zu dem zu testenden Abstandssensor einnehmen. Dadurch lassen sich auch nach dem MIMO-Prinzip arbeitende Abstandssensoren mit guter Genauigkeit und mit erhöhter Sicherheit testen, insbesondere gegenüber solchen Prüfständen mit nur einem einzigen ortsfesten Prüfstand-Empfangselement.

Erfindungsgemäß ist nämlich erkannt worden, dass die Schwierigkeiten beim Test speziell von MIMO-Abstandssensoren darin begründet sind, dass die Wellencharakteristik bei einem ortsfesten Empfang der von dem zu testenden Abstandssensor emittierten elektromagnetischen Wellen so deutlich von einer Wellencharakteristik abweichen kann, die in einer von der ortsfesten Position abweichenden Position auftreten, dass derartige simulierte Reflexionssignale erzeugt und von dem jeweiligen Prüfstand-Abstrahlelement emittiert werden, die der tatsächlichen physikalischen Situation nicht mehr gerecht werden. Dieses Problem lässt sich grundsätzlich mit dem erfindungsgemäßen Aufbau des Prüfstandes ausräumen. Die geschilderte Problematik ließe sich bei einem aus dem Stand der Technik bekannten Prüfstand dadurch abmildern, dass einem nachgeschalteten Reflexionssimulator Informationen über die Arbeitsweise des zu testenden Abstandssensors vermittelt werden. Dies ist jedoch aufwendig und fehleranfällig und widerspricht dem Sinn eines Prüfstandes, der die zu simulierende Umgebung möglichst objektiv nachbilden soll, ohne in detaillierte Informationen über die Funktionsweise des zu testenden Steuergeräts zu verfügen und diese in eine Simulation einfließen zu lassen. Mit dem erfindungsgemäßen Prüfstand ist dies nicht erforderlich.

Erfindungsgemäß ist weiterhin vorgesehen, dass in mehreren unterschiedlichen beweglichen Teilen der Kulisse mindestens jeweils ein Prüfstand-Empfangselement und mindestens jeweils ein Prüfstand-Abstrahlelement gemeinsam angeordnet sind. Dadurch ist es möglich, mit jedem unterschiedlichen beweglichen Teil der Kulisse jeweils ein Objekt im virtuellen Objektraum für den zu testenden Abstandssensor zu simulieren.

Gemäß einer Ausgestaltung des erfindungsgemäßen Prüfstandes ist ferner vorgesehen, dass das gemeinsam in einem beweglichen Teil der Kulisse angeordnete Prüfstand-Empfangselement und das Prüfstand-Abstrahlelement als ein identisches Prüfstand-Empfangs-und-Abstrahlelement ausgebildet ist. Das bedeutet, dass dieses identische Prüfstand-Empfangs-und-Abstrahlelement sowohl zum Empfang des von dem Abstandssensor abgestrahlten Sendesignals dient wie auch zum Abstrahlen des simulierten Reflexionssignals. Speziell kann das identische Prüfstand-Empfangs-und-Abstrahlelement als eine gemeinsame Antenne für Radarwellen, als ein gemeinsames optisches Element für elektromagnetische Wellen im sichtbaren Spektrum oder speziell als gemeinsames Laser-Empfangs-und-Abstrahlelement ausgestaltet sein. Bei dieser Anordnung kann es sinnvoll oder auch erforderlich sein, dass ein nachgeschalteter Reflexionssimulator über eine Signalweiche verfügt, die das empfangene Signal entweder einer Empfangselektronik zuleitet oder ein von dem Reflexionssimulator erzeugtes simuliertes Reflexionssignal dem Prüfstand-Empfangs-und-Abstrahlelement zuleitet.

Bei einer weiteren Ausgestaltung ist vorgesehen, dass das gemeinsam in einem beweglichen Teil der Kulisse angeordnete Prüfstand-Empfangselement und das Prüfstand-Abstrahlelement benachbart zueinander als separates Prüfstand-Empfangselement und als separates Prüfstand-Abstrahlelement angeordnet sind. Wie in der zuvor genannten Variante kann es sich hierbei um separate Antennen für Radarwellen, um separate optische Elemente für elektromagnetische Wellen im sichtbaren Licht oder um separate Laser-Empfangselemente und Laser-Sendeelemente handeln. Bei dieser Ausgestaltung benötigt die nachgeschaltete Elektronik eines Abstandssimulators nicht unbedingt eine Signalweiche, da das empfangene Signal und das abzustrahlende simulierte Reflexionssignal über verschiedene Kanäle bearbeitet werden können. Beide beschriebenen Varianten - integrierte und separate Ausführung - lassen sich in einem Prüfstand auch gemeinsam verwirklichen, nämlich bei verschiedenen funktionalen Paaren von Prüfstand-Empfangselement und Prüfstand-Abstrahlelement.

Eine bevorzugte Ausgestaltung der Erfindung zeichnet sich dadurch aus, dass die Kulisse und/oder der bewegliche Teil der Kulisse als bogenförmiges Element ausgestaltet ist, wobei sich das Element konkav zur Halterung des zu testenden Abstandssensors hin öffnet. Insbesondere kann die Kulisse und/oder der bewegliche Teil der Kulisse kreisring- oder kreisringsegmentförmig ausgestaltet sein. Dadurch umgibt die Kulisse und/oder der bewegliche Teil der Kulisse den zu testenden Abstandssensor, der sich praktisch in einer zentralen Position zur Kulisse und/oder zum dem beweglichen Teil der Kulisse befindet. Der zu testende Abstandssensor kann aber auch außermittig in dem kreisring- oder kreisringsegmentförmigen Teil der Kulisse angeordnet sein, er muss sich im Wirkbereich der Prüfstandelemente befinden. Das bogenförmige Element öffnet sich demzufolge konkav zur Halterung des zu testenden Abstandssensors hin. Speziell ist vorgesehen, dass der bewegliche Teil der Kulisse horizontal (azimutal) entlang seiner Bogenform beweglich gelagert ist. Ist das Element kreisring- oder kreisringsegmentförmig ausgestaltet, bewegt es sich vorzugsweise entlang seiner Kreisringform bzw. seiner Kreisringsegmentform. Vorteilhaft an dieser Anordnung ist insbesondere, dass das Prüfstand-Empfangselement und das Prüfstand-Abstrahlelement, die erfindungsgemäß immer als funktionelle Paare in den beweglichen Teilen der Kulisse angeordnet sind, immer in etwa in Richtung auf den zu testenden Abstandssensor ausgerichtet sind, ohne dass sie in azimutaler Richtung speziell nachgeführt und ausgerichtet werden müssen.

In einer Weiterentwicklung der zuvor genannten Ausgestaltung ist vorgesehen, dass die Kulisse mehrere bewegliche Teile aufweist, die als übereinander gelagerte, gegeneinander bewegliche bogenförmige Elemente ausgestaltet sind, insbesondere wobei die mehreren beweglichen Teile der Kulisse eine gemeinsame Drehachse haben. Die Drehachse muss nicht gegenständlich ausgestaltet sein, es kann sich vielmehr auch um eine virtuelle Drehachse handeln. Insbesondere ist vorgesehen, dass die beweglichen bogenförmigen Elemente kreisring- oder kreisringsegmentförmig ausgestaltet sind.

Bei einer Ausgestaltung der beweglichen Teile der Kulisse als bogenförmige Elemente bietet sich speziell die Möglichkeit, die so geformten Elemente mittels eines Riemenantriebes anzutreiben und auszulenken. Der Riemenantrieb kann beispielsweise einen Zahnriemen umfassen, der um den Umfang des jeweiligen bogenförmigen Elements geführt und gespannt ist, wobei ein elektromotorischer Antrieb einen anderen Spannpunkt des Riemenantriebes bildet. Dieser elektromotorische Antrieb kann insbesondere im rückwärtigen Bereich des Abstandssensors angeordnet sein, sodass der Zwischenraum zwischen dem zu testenden Abstandssensor und der Kulisse vollkommen freigehalten von Antriebselementen ist.

Bei einer bevorzugten Ausgestaltung des Prüfstandes ist die Kulisse in den Bereichen, in denen kein Prüfstand-Empfangselement und kein Prüfstand-Abstrahlelement gehalten wird, mit einem Absorbermaterial für die verwendete elektromagnetische Strahlung belegt oder die Kulisse ist in diesen Bereichen aus einem solchen Material ausgebildet. Dies dient zur Verhinderung von echten Reflexionssignalen. Der zu testende Abstandssensor soll nur von simulierten Reflexionssignalen beaufschlagt werden, die von dem jeweiligen Prüfstand-Abstrahlelement emittiert werden, denn nur diese simulierten Reflexionssignale weisen die gewollte Zeitverzögerung und Frequenzverschiebung auf.

Bei einer Weiterbildung des erfindungsgemäßen Prüfstandes ist auch ein Reflexionssimulator umfasst, wobei der Reflexionssimulator mit dem wenigstens einen Prüfstand-Empfangselement und dem wenigstens einen Prüfstand-Abstrahlelement - die ein gemeinsames funktionelles Paar bilden und die gemeinsam in einem beweglichen Teil der Kulisse angeordnet sind - signaltechnisch verbunden ist. Der Reflexionssimulator ist - wie zuvor beschrieben - dann dazu ausgebildet, das von dem zu testenden Abstandssensor abgestrahlte Sendesignal über das Prüfstand-Empfangselement zu empfangen und auf Grundlage von bereitgestellten Orts- und Bewegungsinformationen eines simulierten Umfeldobjekts ein entsprechendes simuliertes Prüfstand-Sendesignal zu erzeugen und über das Prüfstand-Abstrahlelement in Richtung auf den zu testenden Abstandssensor abzustrahlen.

Bei einer Weiterbildung der Ausgestaltung des Prüfstandes mit einem Reflexionssimulator ist das Prüfstand-Empfangselement und/oder das Prüfstand-Abstrahlelement mit dem Reflexionssimulator über ein Mehrleiterkabel verbunden. Ein Leiter bzw. ein Leiterpaar des Mehrleiterkabels dient der Energieversorgung des Prüfstand-Empfangselements und/oder des Prüfstand-Abstrahlelements. Ein weiterer Leiter des Mehrleiterkabels dient der Übertragung eines Oszillatorsignals vom Reflexionssimulator zum Prüfstand-Empfangselement. Das Oszillatorsignal dient dort zum frequenzmäßigen Abwärtsmischen des empfangenen Sendesignals vom zu testenden Abstandssensor. Alternativ oder zusätzlich dient das übertragene Oszillatorsignal zum frequenzmäßigen Hochmischen eines vom Abstandssimulator simulierten niederfrequenten Reflexionssignals. Ein weiterer Leiter des Mehrleiterkabels dient dazu, das im Prüfstand-Empfangselement empfangene und abwärts gemischte Sendesignal des zu testenden Abstandssensors zum Reflexionssimulator zu übertragen bzw. das vom Reflexionssimulator simulierte und erzeugte niederfrequente Reflexionssignal vom Reflexionssimulator zum Prüfstand-Abstrahlelement zu übertragen. Die Verwendung eines solchen Mehrleiterkabels vereinfacht den Prüfstand-Aufbau erheblich und vermindert die Fehleranfälligkeit. In einer weiteren Ausgestaltung ist das Mehrleiterkabel durch ein Koaxial-Kabel mit mehreren Schirmen und einem zentralen Leiter ersetzt, wobei die Versorgungsspannung, das Oszillatorsignal und das Sende- und Empfangssignal von dem zentralen Leiter des Koaxial-Kabels geführt werden.

Bei einer weiteren vorteilhaften Ausgestaltung des Prüfstandes ist der Reflexionssimulator mit einem Umfeldsimulator signaltechnisch verbunden, sodass der Reflexionssimulator vom Umfeldsimulator Orts- und Bewegungsinformationen eines simulierten Umfeldobjekts für jedes funktionelle Paar aus einem Prüfstand-Empfangselement und einem Prüfstand-Abstrahlelement erhält, die gemeinsam in einem beweglichen Teil der Kulisse angeordnet sind. Damit ist es dem Reflexionssimulator möglich, das empfangene Sendesignal des Abstandssensors gemäß der Abstand- und Bewegungsinformationen zu verzögern und auch frequenzmäßig zu verschieben und dann wieder abzustrahlen; dadurch wird der gewünschte Simulationseffekt erzielt. In Closed-Loop-Anwendungsfällen besteht darüber hinaus auch eine signaltechnische Verbindung zwischen dem Umfeldsimulator und dem zu testenden Abstandssensor, wodurch der Abstandssensor Rückmeldung an den Umfeldsimulator geben kann, der beispielsweise in Form eines Hardware-in-the-Loop-Simulators (HIL-Simulator) vorliegt. Auch für die Zwecke einer Restbussimulation für den Abstandssensor ist eine Verbindung zwischen dem Umfeldsimulator und dem zu testenden Abstandssensor vorgesehen. Üblicherweise benötigen die Detektionsalgorithmen des Abstandssensors Informationen über das Fahrzeug, z. B. aktuelle Eigengeschwindigkeit, Lenkwinkel usw. Diese Signale werden dann von dem Umfeldsimulator bzw. HIL-Simulator an den Abstandssensor geschickt.

Bei einer weiteren Ausgestaltung des Prüfstandes ist ferner vorgesehen, dass ein Antrieb eines funktionellen Paars aus einem Prüfstand-Empfangselement und einem Prüfstand-Abstrahlelement mit einem Umfeldsimulator signaltechnisch verbunden ist. Der Umfeldsimulator berechnet aus der simulierten Relativposition des zu testenden Abstandssensors zu einem simulierten Umfeldobjekt Orts- und Bewegungsinformationen des funktionellen Paars aus Prüfstand-Empfangselement und Prüfstand-Abstrahlelement. Der Umfeldsimulator steuert den Antrieb zur Realisierung der berechneten Lage- und Bewegungsinformation dann entsprechend an.

Im Einzelnen gibt es nun verschiedene Möglichkeiten, den Prüfstand gemäß dem unabhängigen Patentanspruch 1 weiterzubilden und auszugestalten. Dies ist im Zusammenhang mit der Zeichnung in den nachfolgenden Figuren dargestellt. In der Zeichnung zeigen
- Fig. 1: einen aus dem Stand der Technik prinzipiell bekannten Prüfstand,
- Fig. 2: einen erfindungsgemäßen Prüfstand mit integral ausgebildeten Prüfstand-Empfangs- und Abstrahlelementen,
- Fig. 3: einen erfindungsgemäßen Prüfstand mit benachbart zueinander angeordneten separatem Prüfstand-Empfangselement und separatem Prüfstand-Abstrahlelement,
- Fig. 4: einen erfindungsgemäßen Prüfstand mit einem Riemenantrieb und
- Fig. 5: einen erfindungsgemäßen Prüfstand mit Abstandssimulator und Umfeldsimulator.

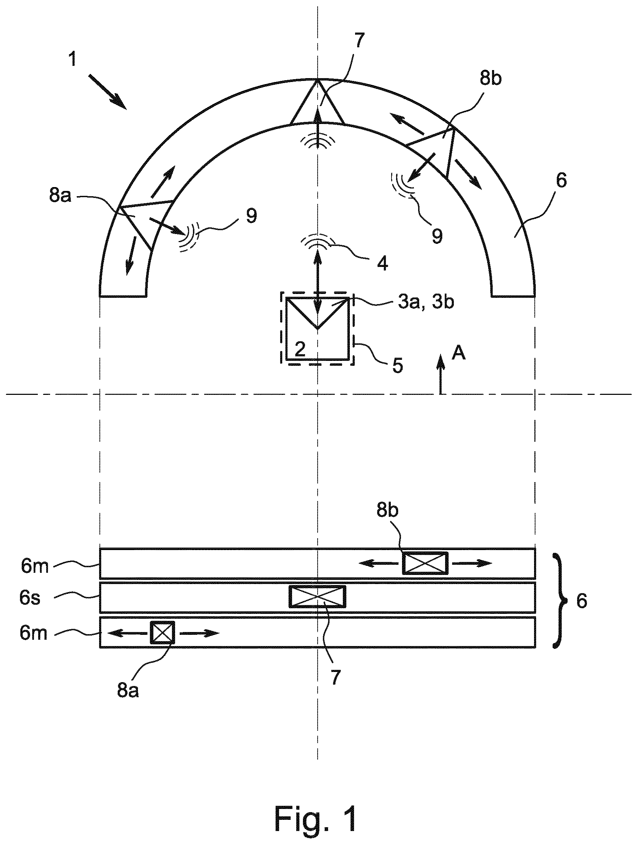

In Fig. 1 ist ein grundsätzlich aus dem Stand der Technik bekannter Prüfstand 1 dargestellt. Der Prüfstand 1 dient zum Test eines mit elektromagnetischen Wellen arbeitenden Abstandssensors 2. Die elektromagnetischen Wellen sind durch gekrümmte Wellenlinien in den Figuren angedeutet. Der zu testende Abstandssensor 2 weist ein Sensor-Abstrahlelement 3a zum Abstrahlen eines Sendesignals 4 und ein Sensor-Empfangselement 3b zum Empfangen eines Reflexionssignals auf.

Der Prüfstand 1 verfügt ferner über eine Aufnahme 5 zur Halterung des zu testenden Abstandssensors 2. Unter der Aufnahme 5 ist lediglich der Ort zu verstehen, an dem der zu testende Abstandssensor 2 zu positionieren ist, um eine optimale Funktion des Prüfstandes 1 zu gewährleisten. Die Aufnahme 5 muss also keine besondere mechanische Ausgestaltung aufweisen.

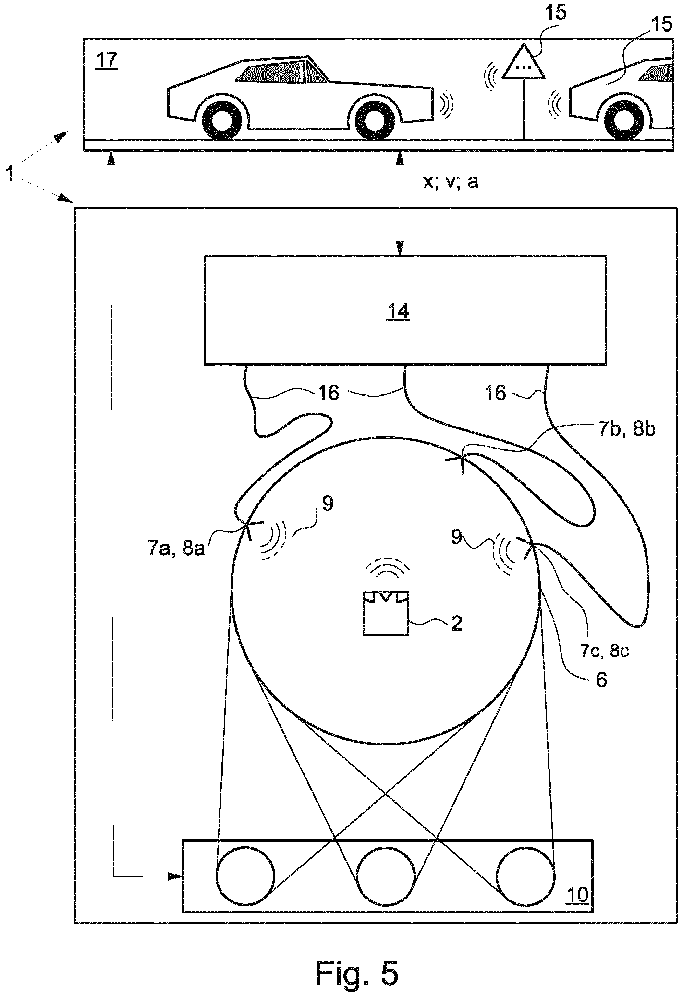

Der Abstandssensor 2 strahlt sein Sendesignal 4 in Richtung auf eine Kulisse 6, die sich demzufolge im Abstrahlbereich des Abstandssensors 2 befindet. Das Sendesignal 4 soll in dem Prüfstand 1 tatsächlich nicht reflektiert werden, eine echte physikalische Reflexion ist sogar zu vermeiden. Ziel ist es vielmehr, dass das Sendesignal 4 von einem in der Kulisse 6 gehaltenen Prüfstand-Empfangselement 7 empfangen wird. Das empfangene Sendesignal 4 wird dann einem in den Fig. 1 bis 4 nicht dargestellten, erst in Fig. 5 schematisch dargestellten Reflexionssimulator 14 zugeleitet, dort gemäß gewisser Vorgaben verzögert und moduliert - insbesondere frequenzverschoben - und mittels einem in der Kulisse 6 ebenfalls gehaltenen Prüfstand-Abstrahlelement 8 als Prüfstand-Sendesignal 9 emittiert; das Prüfstand-Sendesignal 9 ist also kein tatsächliches Reflexionssignal, sondern ein simuliertes Reflexionssignal.

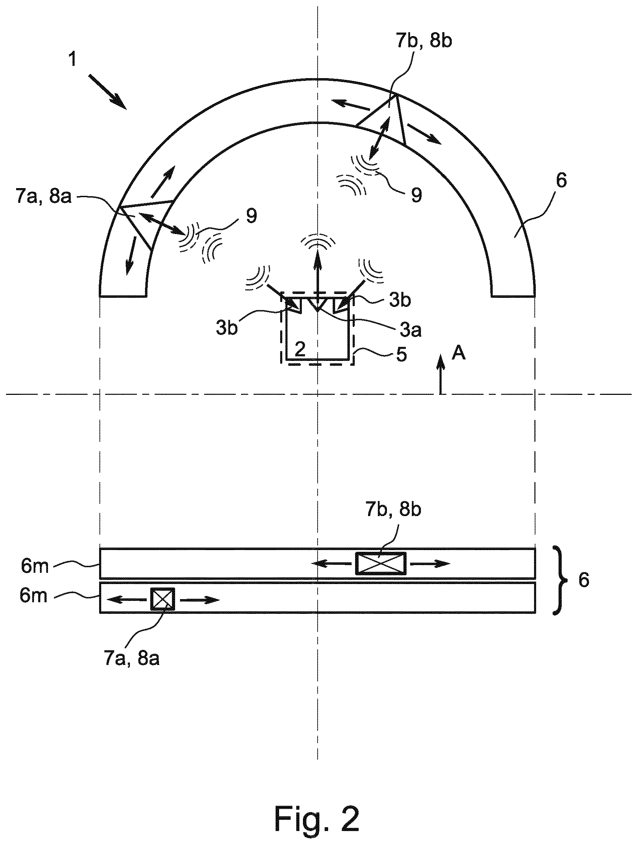

In dem oberen Teil der schematischen Darstellung in Fig. 1 hat es zunächst den Anschein, als wären das Prüfstand-Empfangselement 7 und die Prüfstand-Abstrahlelemente 8a, 8b in einem gemeinsamen Teil der Kulisse 6 gehalten. Dies ist tatsächlich nicht so, was sich aus dem unteren Teil von Fig. 1 ergibt (Entsprechendes gilt im Übrigen auch für die Fig. 2 bis 4). Der untere Teil von Fig. 1 zeigt eine Seitenansicht auf dem Prüfstand 1 in Richtung A, Blickrichtung ist also vom Abstandssensor 2 in Richtung auf die Kulisse 6. In dieser Ansicht ist nun zu erkennen, dass die Kulisse 6 aus verschiedenen übereinander gelagerten Segmenten besteht. Bei diesen Segmenten handelt es sich um Kreisringsegmente. Das mittlere Element 6s ("s" für "stationär") wird nicht bewegt. In dem nicht beweglichen Teil 6s der Kulisse 6 ist das Prüfstand-Empfangselement 7 gehalten, sodass das Prüfstand-Empfangselement 7 ebenfalls ortsfest ist und praktisch immer direkt gegenüber der Aufnahme 5 des Abstandssensors 2 positioniert ist. Die beiden Kreissegmentringe 6m ("m" für "moveable") der Kulisse 6 sind drehbeweglich gelagert und zwar in Umfangrichtung der kreissegmentförmigen Kulisse 6. Diese Drehbewegung ist in den Kreissegmentringen 6m der Kulisse 6 durch die Pfeile links und rechts von den Prüfstand-Abstrahlelementen 8a und 8b angedeutet. Diese Prüfstand-Abstrahlelemente 8a und 8b können sich demzufolge um den zu testenden Abstandssensor 2 herumbewegen und so Prüfstand-Sendesignale 9 als simulierte Reflexionssignale auf den zu testenden Abstandssensor 2 aus verschiedenen Richtungen abstrahlen. So lassen sich verschiedene Objekte in einem simulierten Umfeld in Bezug auf den zu testenden Abstandssensor 2 vortäuschen.

Einleitend ist beschrieben worden, dass zu testende Abstandssensoren 2, die ein richtungsabhängiges Abstrahl- und/oder Empfangsverhalten haben, mit dem aus dem Stand der Technik geschilderten Prüfstand unter Umständen schwierig zu testen sind (als Beispiel wurden auf dem MIMO-Prinzip beruhende Abstandssensoren genannt). Erfindungsgemäß ist erkannt worden, dass dieses Problem damit zusammenhängt, dass die verwendeten und ortsveränderlichen Wellencharakteristiken mit dem bekannten Prüfstand in bestimmten Situationen nicht hinreichend genau erfasst werden können, wodurch dann auch nicht den tatsächlichen Gegebenheiten entsprechende und möglicherweise aus Sicht des zu testenden Abstandssensors inkonsistente Prüfstand-Sendesignale folgen bzw. erzeugt werden.

In den Fig. 2 bis 5 sind nun Prüfstände 1 dargestellt, mit denen sich auch komplexere Prüfsituationen mit elektromagnetischen Wellen nachbilden lassen. Den dargestellten Lösungen ist gemeinsam, dass wenigstens ein Prüfstand-Empfangselement 7, 7a, 7b und ein Prüfstand-Abstrahlelement 8, 8a, 8b gemeinsam in einem beweglichen Teil 6m der Kulisse 6 angeordnet sind. Durch diese Ausgestaltung der Prüfstände 1 in den Fig. 2 bis 4 ist gewährleistet, dass ein Prüfstand-Empfangselement 7a, 7b und ein jeweils zugeordnetes Prüfstand-Abstrahlelement 8a, 8b immer nur gemeinsam miteinander ausgelenkt werden können. Es ist demzufolge sinnvoll, dass die so entstehenden funktionellen Paare 7a, 8a und 7b, 8b von voneinander zugeordneten und zueinander gehörigen Prüfstand-Empfangselementen 7a, 7b und Prüfstand-Abstrahlelementen 8a, 8b in unmittelbarer Nähe zueinander angeordnet sind, da so Orte des Empfangs der Sendesignale 4 des Abstandssensors 2 und die Abstrahlorte der Prüfstand-Sendesignale 9 als simulierte Reflexionssignale örtlich möglichst deckungsgleich sind, wie dies auch in realen physikalischen Objektumgebungen der Fall ist. Auf diese Weise können auch komplizierte Wellencharakteristiken von dem Prüfstand 1 nachgebildet werden.

In den Fig. 2 bis 4 ist der zu testende Abstandssensor 2 als ein Abstandssensor 2 mit einer etwas komplizierteren Empfangscharakteristik dargestellt, es sind dort nämlich jeweils ein Sensor-Abstrahlelement 3a und mehrere Sensor-Empfangselemente 3b angedeutet. Reale Abstandssensoren 2 verfügen auch über mehrere Sensor-Abstrahlelemente und können auch über weitaus mehr Sensor-Empfangselemente verfügen.

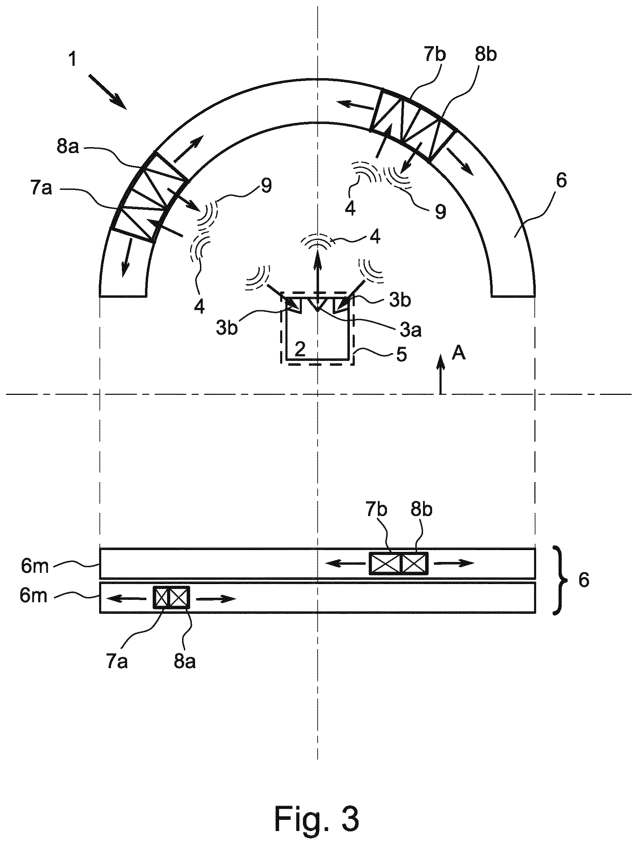

Den Ausführungsbeispielen in den Fig. 2 und 3 ist gemein, dass es mehrere unterschiedliche bewegliche Teile 6m der Kulisse 6 gibt. In dem dargestellten Ausführungsbeispiel gibt es insgesamt zwei bewegliche Teile 6m, in denen jeweils ein Prüfstand-Empfangselement 7a, 7b und jeweils ein Prüfstand-Abstrahlelement 8a, 8b gemeinsam angeordnet sind.

Das Ausführungsbeispiel gemäß Fig. 2 zeichnet sich dadurch aus, dass das gemeinsam in einem beweglichen Teil 6m der Kulisse 6 angeordnete Prüfstand-Empfangselement 7a, 7b und das Prüfstand-Abstrahlelement 8a, 8b als ein identisches (integral ausgebildetes) Prüfstand-Empfangs-und-Abstrahlelement 7a, 8a und 7b, 8b ausgebildet ist. Im vorliegenden Fall handelt es sich bei dem zu testenden Abstandssensor 2 um einen Radarsensor, sodass die identischen und integral ausgebildeten Prüfstand-Empfangs-und-Abstrahlelemente 7a, 8a bzw. 7b, 8b insbesondere eine gemeinsame Antenne für Radarwellen aufweisen. In Fig. 2 ist im oberen Teil durch die Doppelpfeile angedeutet, dass die Prüfstand-Empfangs-und-Abstrahlelemente 7a, 8a bzw. 7b, 8b sowohl sendende als auch empfangende Eigenschaften haben.

Das in Fig. 3 dargestellte Ausführungsbeispiel zeichnet sich dadurch aus, dass das gemeinsam in einem beweglichen Teil 6m der Kulisse 6 angeordnete Prüfstand-Empfangselement 7a, 7b und das jeweils zugeordnete Prüfstand-Abstrahlelement 8a, 8b benachbart zueinander (hier nämlich nebeneinander) als separates Prüfstand-Empfangselement 7a, 7b und als separates Prüfstand-Abstrahlelement 8a, 8b angeordnet sind, hier speziell also als separate Antennen für Radiowellen. Bei hier nicht dargestellten Ausführungsbeispielen ist eine benachbarte Anordnung der Elemente auch übereinander möglich. Bei diesem Ausführungsbeispiel ergeben sich für die nachgelagerte Signalverarbeitung automatisch zwei verschiedene Signalkanäle für den Empfang und die Ausgabe von elektromagnetischen Wellen, wo hingegen bei dem Ausführungsbeispiel gemäß Fig. 2 mit nur einem Signalkanal gearbeitet wird, sodass eine nachgelagerte Verarbeitungselektronik mit einer Signalweiche arbeiten muss.

Den dargestellten Ausführungsbeispielen ist ebenfalls gemein, dass die Kulisse 6, die hier identisch ist mit den beweglichen Teilen 6m der Kulisse 6 als bogenförmige, nämlich kreissegmentförmige Elemente bzw. als kreisringsegmentförmige Elemente ausgestaltet ist bzw. sind, wobei sich die Elemente konkav zur Aufnahme 5 des zu testenden Abstandssensors 2 hin öffnen. Die beweglichen Teile 6m der Kulisse 6 sind horizontal - also im Azimut - entlang ihrer Kreisringform beweglich gelagert. Die Drehachse der kreisringsegmentförmigen Elemente existiert hier nur virtuell, also nicht gegenständlich, da eine Drehachse als solche gegenständlich nicht realisiert ist. Die mehreren beweglichen Teile 6m sind als übereinander gelagerte, gegeneinander bewegliche kreisringsegmentförmige Elemente ausgestaltet, was andeutungsweise nur den unteren schematischen Darstellungen in der Seitenansicht der Figuren entnommen werden kann.

Kern des erfindungsgemäßen Prüfstandaufbaus ist die Anordnung der Prüfstand-Empfangselemente 7 und der Prüfstand-Abstrahlelemente 8 in der Kulisse 6. Insoweit gehört also der zu testende Abstandssensor 2 nicht zu dem beschriebenen und beanspruchten Prüfstand 1 hinzu. Gleichwohl wird er eng in Zusammenhang mit dem Prüfstand 1 beschrieben, da nur in dem Zusammenhang mit einem zu testenden Abstandssensor 2 funktionale Zusammenhänge sinnvoll dargestellt werden können.

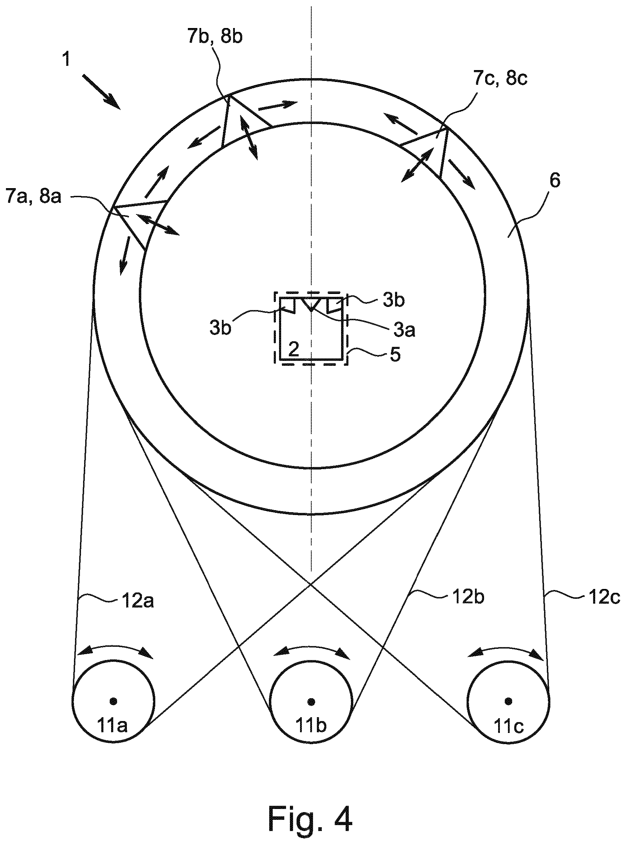

In Fig. 4 ist schematisch dargestellt, dass die beweglichen, kreisringsegmentförmigen Elemente 6m mittels eines Riemenantriebes 10 angetrieben und ausgelenkt werden. In dem dargestellten Ausführungsbeispiel gibt es insgesamt drei bewegliche Elemente 6m mit jeweils einem Prüfstand-Empfangs-und -Abstrahlelement 7a, 8a bzw. 7b, 8b und 7c, 8c. Die drei verschiedenen beweglichen Elemente 6m werden jeweils über eine separate Antriebswalze 11a, 11b, 11c mittels eines Zahnriemens 12a, 12b, 12c angetrieben.

In Fig. 4 ist ferner dargestellt, dass die Kulisse 6 in den Bereichen, in denen kein Prüfstand-Empfangselement 7 und kein Prüfstand-Abstrahlelement 8 gehalten wird, mit einem Absorbermaterial 13 für die verwendete elektromagnetische Strahlung - hier Radarwellen - belegt ist.

Fig. 5 zeigt einen erweiterten Aufbau des zuvor dargestellten Prüfstandes 1. Hier ist ein Reflexionssimulator 14 vorgesehen, wobei der Reflexionssimulator 14 mit den Prüfstand-Empfangselementen 7a, 7b und den Prüfstand-Abstrahlelement 8a, 8b, die gemeinsam in einem beweglichen Teil 6m der Kulisse 6 angeordnet sind, signaltechnisch verbunden ist. Der Reflexionssimulator 14 ist dazu ausgebildet, das von dem zu testenden Abstandssensor 2 abgestrahlte Sendesignal 4 über das Prüfstand-Empfangselement 7 zu empfangen und auf Grundlage von bereitgestellten Orts- und Bewegungsinformationen sowie Eigenschaften xᵢ; vᵢ; aᵢ, (also Ort und/oder Geschwindigkeit und/oder Beschleunigung und/oder Objektgröße) eines simulierten Umfeldobjektes 15 ein entsprechendes Prüfstand-Sendesignal 9 zu erzeugen und über das Prüfstand-Abstrahlelement 8a, 8b; 8c in Richtung auf den zu testenden Abstandssensor 2 abzustrahlen.

Das Prüfstand-Empfangselement 7 und das Prüfstand-Abstrahlelement 8 sind mit dem Reflexionssimulator 14 über ein Mehrleiterkabel 16 verbunden, wobei ein Leiter bzw. ein Leiterpaar der Energieversorgung des Prüfstand-Empfangselements 7 und des Prüfstand-Abstrahlelements 8 dient. Ein weiterer Leiter dient der Übertragung eines Oszillatorsignals vom Reflexionssimulator 14 zum Prüfstand-Empfangselement 7, nämlich zum frequenzmäßigen Abwärtsmischen des empfangenen Sendesignals 4 vom zu testenden Abstandssensor 2 und zum frequenzmäßigen Hochmischen eines vom Reflexionssimulator 14 simulierten niederfrequenten Reflexionssignals. Dabei dient ein Leiter dazu, das im Prüfstand-Empfangselement 7 empfangene und abwärtsgemischte Sendesignal des zu testenden Abstandssensors 2 zum Reflexionssimulator 14 zu übertragen bzw. das vom Reflexionssimulator 14 simulierte und erzeugte niederfrequente simulierte Reflexionssignal vom Reflexionssimulator 14 zum Prüfstand-Abstrahlelement 8 zu übertragen.

Fig. 5 zeigt ferner, dass der Reflexionssimulator 14 mit einem Umfeldsimulator 17 signaltechnisch verbunden ist und der Reflexionssimulator 14 vom Umfeldsimulator 17 Orts- und Bewegungsinformationen (xᵢ, vᵢ, aᵢ) eines simulierten Umfeldobjektes 15 für jedes funktionelle Paar 7a, 8a; 7b, 8b aus einem Prüfstand-Empfangselement 7a, 7b und einem Prüfstand-Abstrahlelement 8a, 8b erhält, die gemeinsam in einem beweglichen Teil 6m der Kulisse 6 angeordnet sind.

Fig. 5 zeigt abschließend, dass ein Antrieb 10 eines Paars 7a, 8a; 7b, 8b aus einem Prüfstand-Empfangselement 7a, 7b und einem Prüfstand-Abstrahlelement (8a, 8b) mit dem Umfeldsimulator 17 signaltechnisch verbunden ist und der Umfeldsimulator 17 aus der simulierten Relativposition des zu testenden Abstandssensors 2 zu dem jeweils zugeordneten simulierten Umfeldobjekt 15 Lage- und Bewegungsinformationen des Paars 7a, 8a; 7b, 8b aus Prüfstand-Empfangselement 7a, 7b und Prüfstand-Abstrahlelement 8a, 8b berechnet und den Antrieb 10 zur Realisierung der berechneten Lage- und Bewegungsinformationen entsprechend ansteuert.

### Bezugszeichen

- 1: Prüfstand
- 2: Abstandssensor
- 3a: Sensor-Abstrahlelement
- 3b: Sensor-Empfangselement
- 4: Reflexionssignal
- 5: Aufnahme
- 6: Kulisse
- 6m: bewegliches Kulissenelement
- 6s: unbewegtes Kulissenelement
- 7: Prüfstand-Empfangselement
- 8: Prüfstand Abstrahlelement
- 9: Prüfstand-Sendesignal
- 10: Riemenantrieb
- 11: Antriebswalze
- 12: Zahnriemen
- 13: Absorbermaterial
- 14: Reflexionssimulator
- 15: Umfeldobjekt
- 16: Mehrleiterkabel
- 17: Umfeldsimulator

## Patentansprüche

1. Prüfstand (1) zum Test eines mit elektromagnetischen Wellen arbeitenden Abstandssensors (2), wobei der zu testende Abstandssensor (2) wenigstens ein Sensor-Abstrahlelement (3a) zum Abstrahlen eines Sendesignals (4) und ein Sensor-Empfangselement (3b) zum Empfangen eines Reflexionssignals umfasst, mit einer Aufnahme (5) zur Halterung des zu testenden Abstandssensors (2), mit einer zumindest teilweise beweglichen Kulisse (6, 6m, 6s) im Abstrahlbereich eines in der Aufnahme (5) gehaltenen Abstandssensors (2), mit wenigstens einem in der Kulisse (6, 6m, 6s) gehaltenen Prüfstand-Empfangselement (7) zum Empfangen eines vom Sensor-Abstrahlelement (3a) abgestrahlten Sendesignals (4) und mit wenigstens einem in der Kulisse (6) gehaltenen Prüfstand-Abstrahlelement (8) zum Abstrahlen eines Prüfstand-Sendesignals (9) als simuliertes Reflexionssignal, die Prüfstand-Abstrahlelemente (8a, 8b) können sich demzufolge um den zu testenden Abstandssensor (2) herumbewegen und so Prüfstand-Sendesignale (9) als simulierte Reflexionssignale auf den zu testenden Abstandssensor (2) aus verschiedenen Richtungen abstrahlen, sodass sich verschiedene Objekte in einem simulierten Umfeld in Bezug auf den zu testenden Abstandssensor (2) vortäuschen lassen,
**dadurch gekennzeichnet,**
**dass** wenigstens ein Prüfstand-Empfangselement (7, 7a, 7b) und ein jeweils zugeordnetes Prüfstand-Abstrahlelement (8, 8a, 8b) gemeinsam in einem beweglichen Teil (6m) der Kulisse (6) angeordnet sind, sodass das wenigstens eine Prüfstand-Empfangselement (7, 7a, 7b) und das jeweils zugeordnete Prüfstand-Abstrahlelement (8, 8a, 8b) immer nur gemeinsam miteinander ausgelenkt werden können, wobei die Paare (7a, 8a und 7b, 8b) von voneinander zugeordneten Prüfstand-Empfangselement (7, 7a, 7b) und Prüfstand-Abstrahlelement (8, 8a, 8b) in unmittelbarer Nähe zueinander angeordnet sind, und
**dass** in mehreren unterschiedlichen beweglichen Teilen (6m) der Kulisse (6) mindestens jeweils ein Prüfstand-Empfangselement (7a, 7b) und mindestens jeweils ein Prüfstand-Abstrahlelement (8a, 8b) gemeinsam angeordnet sind, wodurch es möglich ist, mit jedem unterschiedlichen beweglichen Teil der Kulisse jeweils ein Objekt im virtuellen Objektraum für den zu testenden Abstandssensor (2) zu simulieren.

2. Prüfstand (1) nach Anspruch 1, **dadurch gekennzeichnet, dass** das gemeinsam in einem beweglichen Teil (6m) der Kulisse (6) angeordnete Prüfstand-Empfangselement (7a, 7b) und das Prüfstand-Abstrahlelement (8a, 8b) als ein identisches Prüfstand-Empfangs-und-Abstrahlelement (7a, 8a; 7b, 8b) ausgebildet ist, insbesondere als eine gemeinsame Antenne für Radarwellen, insbesondere als ein gemeinsames optisches Element für elektromagnetische Wellen im sichtbaren Spektrum, insbesondere als gemeinsames Laser-Empfangs-und-Sendeelement.

3. Prüfstand (1) nach Anspruch 1 oder 2, **dadurch gekennzeichnet, dass** das gemeinsam in einem beweglichen Teil (6m) der Kulisse (6) angeordnete Prüfstand-Empfangselement (7a, 7b) und das Prüfstand-Abstrahlelement (8a, 8b) benachbart zueinander als separates Prüfstand-Empfangselement (7a, 7b) und als separates Prüfstand-Abstrahlelement (8a, 8b) angeordnet sind, insbesondere als separate Antennen für Radarwellen, insbesondere als separate optische Elemente für elektromagnetische Wellen im sichtbaren Spektrum, insbesondere als separates Laser-Empfangselement und Laser-Sendeelement.

4. Prüfstand (1) nach einem der Ansprüche 1 bis 3, **dadurch gekennzeichnet, dass** die Kulisse (6) und/oder der bewegliche Teil (6m) der Kulisse (6) als bogenförmiges, insbesondere kreisring- oder kreisringsegmentförmiges Element ausgestaltet ist, wobei sich das Element konkav zur Aufnahme (5) des zu testenden Abstandssensors (2) hin öffnet, insbesondere wobei der bewegliche Teil (6m) der Kulisse (6) horizontal entlang seiner Bogenform, insbesondere entlang seiner Kreisringform oder seiner Kreisringsegmentform beweglich gelagert ist.

5. Prüfstand (1) nach Anspruch 4, **dadurch gekennzeichnet, dass** die Kulisse (6) mehrere bewegliche Teile (6m) aufweist, die als übereinandergelagerte, gegeneinander bewegliche bogenförmige, insbesondere kreisring- oder kreisringsegmentförmige Elemente ausgestaltet sind, insbesondere wobei die mehreren beweglichen Teile der Kulisse eine gemeinsame, insbesondere nicht gegenständliche, Drehachse haben.

6. Prüfstand (1) nach Anspruch 4 oder 5, **dadurch gekennzeichnet, dass** das bewegliche bogenförmige, insbesondere kreisring- oder kreisringsegmentförmige Element (6m) mittels eines Riemenantriebes (10) angetrieben und ausgelenkt ist.

7. Prüfstand (1) nach einem der Ansprüche 1 bis 6, **dadurch gekennzeichnet, dass** die Kulisse (6) in den Bereichen, in denen kein Prüfstand-Empfangselement (7) und kein Prüfstand-Abstrahlelement (8) gehalten wird, mit einem Absorbermaterial (13) für die verwendete elektromagnetische Strahlung belegt ist oder aus einem solchen Material ausgebildet ist.

8. Prüfstand (1) nach einem der Ansprüche 1 bis 7, **dadurch gekennzeichnet, dass** ein Reflexionssimulator (14) umfasst ist, der Reflexionssimulator (14) mit dem wenigstens einen Prüfstand-Empfangselement (7) und dem wenigstens einen Prüfstand-Abstrahlelement (8), die gemeinsam in einem beweglichen Teil (6m) der Kulisse (6) angeordnet sind, signaltechnisch verbunden ist, der Reflexionssimulator (14) dazu ausgebildet ist, das von dem zu testenden Abstandssensor (2) abgestrahlte Sendesignal (4) über das Prüfstand-Empfangselement (7) zu empfangen und auf Grundlage von bereitgestellten Orts- und Bewegungsinformationen (xᵢ, vᵢ; aᵢ) eines simulierten Umfeldobjektes (15) ein entsprechendes Prüfstand-Sendesignal (9) zu erzeugen und über das Prüfstand-Abstrahlelement (8a, 8b; 8c) in Richtung auf den zu testenden Abstandssensor (2) abzustrahlen.

9. Prüfstand (1) nach Anspruch 8, **dadurch gekennzeichnet, dass** das Prüfstand-Empfangselement (7) und/oder das Prüfstand-Abstrahlelement (8) mit dem Reflexionssimulator (14) über ein Mehrleiterkabel (16) verbunden ist, wobei ein Leiter bzw. ein Leiterpaar der Energieversorgung des Prüfstand-Empfangselements (7) und/oder des Prüfstand-Abstrahlelements (8) dient, ein Leiter der Übertragung eines Oszillatorsignals vom Reflexionssimulator (14) zum Prüfstand-Empfangselement (7) dient zum frequenzmäßigen Abwärtsmischen des empfangenen Sendesignals (4) vom zu testenden Abstandssensor (2) und zum frequenzmäßigen Hochmischen eines vom Reflexionssimulator (14) simulierten niederfrequenten Reflexionssignals, und wobei ein Leiter dazu dient, das im Prüfstand-Empfangselement (7) empfangene und abwärtsgemischte Sendesignal des zu testenden Abstandssensors (2) zum Reflexionssimulator (14) zu übertragen bzw. das vom Reflexionssimulator (14) simulierte und erzeugte niederfrequente Reflexionssignal (9) vom Reflexionssimulator (14) zum Prüfstand-Abstrahlelement (8) zu übertragen.

10. Prüfstand (1) nach Anspruch 8 oder 9, **dadurch gekennzeichnet, dass** der Reflexionssimulator (14) mit einem Umfeldsimulator (17) signaltechnisch verbunden ist und der Reflexionssimulator (14) vom Umfeldsimulator (17) Orts- und Bewegungsinformationen (xᵢ, vᵢ, a-) eines simulierten Umfeldobjektes (15) für jedes funktionelle Paar aus einem Prüfstand-Empfangselement (7a, 7b) und einem Prüfstand-Abstrahlelement (8a, 8b) erhält, die gemeinsam in einem beweglichen Teil (6m) der Kulisse (6) angeordnet sind.

11. Prüfstand (1) nach einem der Ansprüche 1 bis 10, **dadurch gekennzeichnet, dass** ein Antrieb (10) eines Paares (7a, 8a; 7b, 8b) aus einem Prüfstand-Empfangselement (7a, 7b) und einem Prüfstand-Abstrahlelement (8a, 8b) mit dem Umfeldsimulator (17) signaltechnisch verbunden ist und der Umfeldsimulator (17) aus der simulierten Relativposition des zu testenden Abstandssensors (2) zu dem jeweils zugeordneten simulierten Umfeldobjekt (15) Lage- und Bewegungsinformationen des Paares (7a, 8a; 7b, 8b) aus Prüfstand-Empfangselement (7a, 7b) und Prüfstand-Abstrahlelement (8a, 8b) berechnet und den Antrieb (10) zur Realisierung der berechneten Lage- und Bewegungsinformationen entsprechend ansteuert.

## Claims

1. Test stand (1) for testing a distance sensor (2) operating with electromagnetic waves, wherein the distance sensor (2) to be tested comprises at least one sensor emitting element (3a) for emitting a transmission signal (4) and a sensor receiving element (3b) for receiving a reflection signal, with a holder (5) for holding the distance sensor (2) to be tested, with an at least partially movable coulisse (6, 6m, 6s) in the radiation range of a distance sensor (2) held in the holder (5), with at least one sensor (2) held in the coulisse (6, 6m, 6s) for receiving a transmission signal (4) emitted by the sensor emitting element (3a) and with at least one test stand emitting element (8) held in the coulisse (6) for emitting a test stand transmission signal (9) as a simulated reflection signal, the test stand emitting elements (8a, 8b) can therefore move around the distance sensor (2) to be tested and thus emit test stand transmission signals (9) as simulated reflection signals onto the distance sensor (2) to be tested from different directions, so that different objects can be simulated in a simulated environment in relation to the distance sensor (2) to be tested,
**characterised in that**
**in that** at least one test stand receiving element (7, 7a, 7b) and a respectively associated test stand radiating element (8, 8a, 8b) are arranged together in a movable part (6m) of the coulisse (6), so that the at least one test stand receiving element (7, 7a, 7b) and the respectively associated test stand radiating element (8, 8a, 8b) can only ever be deflected together with one another, and
at least one test stand receiving element (7a, 7b) and at least one test stand emitting element (8a, 8b) are arranged together in a plurality of different movable parts (6m) of the splitter (6), whereby it is possible to simulate an object in the virtual object space for the distance sensor (2) to be tested with each different movable part of the splitter.

2. Test stand (1) according to claim 1, **characterised in that** the test stand receiving element (7a, 7b) arranged jointly in a movable part (6m) of the coulisse (6) and the test stand emitting element (8a, 8b) are designed as an identical test stand receiving and emitting element (7a, 8a; 7b, 8b), in particular as a common antenna for radar waves, in particular as a common optical element for electromagnetic waves in the visible spectrum, in particular as a common laser receiving and transmitting element.

3. Test stand (1) according to claim 1 or 2, **characterised in that** the test stand receiving element (7a, 7b) arranged jointly in a movable part (6m) of the coulisse (6) and the test stand radiating element (8a, 8b) are arranged adjacent to one another as a separate test stand receiving element (7a, 7b) and as a separate test stand radiating element (8a, 8b), in particular as separate antennas for radar waves, in particular as separate optical elements for electromagnetic waves in the visible spectrum, in particular as a separate laser receiving element and laser transmitting element.

4. Test stand (1) according to one of claims 1 to 3, **characterised in that** the coulisse (6) and/or the movable part (6m) of the coulisse (6) is designed as an arcuate, in particular annular or annular segment-shaped element, wherein the element opens concavely towards the receptacle (5) of the distance sensor (2) to be tested, in particular wherein the movable part (6m) of the coulisse (6) is horizontally movably mounted along its arc shape, in particular along its circular ring shape or its circular ring segment shape.

5. Test stand (1) according to claim 4, **characterised in that** the link (6) has a plurality of movable parts (6m) which are designed as arcuate, in particular circular ring or circular ring segment-shaped elements mounted one above the other and movable relative to one another, in particular wherein the plurality of movable parts of the link have a common, in particular non-representational, axis of rotation.

6. Test stand (1) according to claim 4 or 5, **characterised in that** the movable arcuate, in particular circular ring or circular ring segment-shaped element (6m) is driven and deflected by means of a belt drive (10).

7. Test stand (1) according to one of claims 1 to 6, **characterised in that** the coulisse (6) is covered with an absorber material (13) for the electromagnetic radiation used or is formed from such a material in the regions in which no test stand receiving element (7) and no test stand radiating element (8) is held.

8. Test stand (1) according to one of claims 1 to 7, **characterised in that** a reflection simulator (14) is included, the reflection simulator (14) is signal-technically connected to the at least one test stand receiving element (7) and the at least one test stand radiating element (8), which are arranged together in a movable part (6m) of the coulisse (6), the reflection simulator (14) is designed to receive the transmission signal (4) emitted by the distance sensor (2) to be tested via the test stand receiving element (7) and to simulate a simulated movement on the basis of location and movement information (xi; vi; ai) of a simulated surrounding object (15) and to generate a corresponding test stand transmit signal (9) and to radiate it via the test stand radiating element (8a, 8b; 8c) in the direction of the distance sensor (2) to be tested.

9. Test stand (1) according to claim 8, **characterised in that** the test stand receiving element (7) and/or the test stand radiating element (8) is connected to the reflection simulator (14) via a multi-conductor cable (16), wherein one conductor or one conductor pair of the power supply of the test stand is connected to the reflection simulator (14). one conductor or pair of conductors is used to supply power to the test stand receiving element (7) and/or the test stand radiating element (8), one conductor is used to transmit an oscillator signal from the reflection simulator (14) to the test stand receiving element (7) for frequency down-mixing of the received transmission signal (4) from the distance sensor (2) to be tested and for frequency up-mixing of a low-frequency reflection signal simulated by the reflection simulator (14), and wherein a conductor serves to transmit the down-converted transmission signal of the distance sensor (2) to be tested, which is received in the test stand receiver element (7), to the reflection simulator (14), and to transmit the low-frequency reflection signal (9) simulated and generated by the reflection simulator (14) from the reflection simulator (14) to the test stand emitting element (8).

10. Test stand (1) according to claim 8 or 9, **characterised in that** the reflection simulator (14) is signal-technically connected to an environment simulator (17) and the reflection simulator (14) receives location and movement information (xi, vi, a-) of a simulated environment object (15) for each functional pair of a test stand receiving element (7a, 7b) and a test stand emitting element (8a, 8b), which are arranged together in a movable part (6m) of the coulisse (6).

11. Test bench (1) according to any one of claims 1 to 10, **characterised in that** a drive (10) of a pair (7a, 8a; 7b, 8b) comprising a test stand receiving element (7a, 7b) and a test stand emitting element (8a, 8b) is connected to the environment simulator (17) by signalling and the environment simulator (17) receives position and movement information of the pair (7a, 8a, 8b) from the simulated relative position of the distance sensor (2) to be tested to the respectively assigned simulated environment object (15); 7b, 8b) of the test stand receiving element (7a, 7b) and test stand emitting element (8a, 8b) and controls the drive (10) accordingly to realise the calculated position and movement information.

## Revendications

1. Banc d'essai (1) pour tester un capteur de distance (2) fonctionnant avec des ondes électromagnétiques, le capteur de distance (2) à tester comprenant au moins un élément d'émission de capteur (3a) pour émettre un signal d'émission (4) et un élément de réception de capteur (3b) pour recevoir un signal de réflexion, avec un logement (5) pour la fixation du capteur de distance (2) à tester, avec une coulisse (6, 6m, 6s) au moins partiellement mobile dans la zone de rayonnement d'un capteur de distance (2) maintenu dans le logement (5), avec au moins un capteur de distance (2) maintenu dans la coulisse (6, 6m, 6s) pour recevoir un signal d'émission (4) émis par l'élément de rayonnement du capteur (3a) et avec au moins un élément de rayonnement du banc d'essai (8) maintenu dans la coulisse (6) pour émettre un signal d'émission du banc d'essai (9) comme signal de réflexion simulé, les éléments de rayonnement du banc d'essai (8a, 8b) peuvent donc se déplacer autour du capteur de distance (2) à tester et émettre ainsi des signaux d'émission de banc d'essai (9) sous forme de signaux de réflexion simulés sur le capteur de distance (2) à tester à partir de différentes directions, de sorte que différents objets peuvent être simulés dans un environnement simulé par rapport au capteur de distance (2) à tester,
**caractérisé en ce que**
**en ce qu'**au moins un élément de réception de banc d'essai (7, 7a, 7b) et un élément de rayonnement de banc d'essai (8, 8a, 8b) respectivement associé sont disposés ensemble dans une partie mobile (6m) de la coulisse (6), de sorte qu'au moins un élément de réception de banc d'essai (7, 7a, 7b) et l'élément de rayonnement de banc d'essai (8, 8a, 8b) respectivement associé ne peuvent être déviés qu'ensemble à chaque fois, et
**en ce que**, dans plusieurs parties mobiles différentes (6m) de la coulisse (6), au moins un élément de réception de banc d'essai (7a, 7b) et au moins un élément de rayonnement de banc d'essai (8a, 8b) sont respectivement disposés en commun, ce qui permet de simuler avec chaque partie mobile différente de la coulisse respectivement un objet dans l'espace d'objet virtuel pour le capteur de distance (2) à tester.

2. Banc d'essai (1) selon la revendication 1, **caractérisé en ce que** l'élément de réception du banc d'essai (7a, 7b) et l'élément de rayonnement du banc d'essai (8a, 8b), disposés ensemble dans une partie mobile (6m) de la coulisse (6), constituent un élément de réception et de rayonnement du banc d'essai identique (7a, 8a ; 7b, 8b), en particulier comme une antenne commune pour les ondes radar, en particulier comme un élément optique commun pour les ondes électromagnétiques dans le spectre visible, en particulier comme un élément de réception et d'émission laser commun.

3. Banc d'essai (1) selon la revendication 1 ou 2, **caractérisé en ce que** l'élément de réception de banc d'essai (7a, 7b) disposé en commun dans une partie mobile (6m) de la coulisse (6) et l'élément d'émission de banc d'essai (8a, 8b) sont disposés à proximité l'un de l'autre en tant qu'élément de réception de banc d'essai séparé (7a, 7b) et en tant qu'élément de rayonnement de banc d'essai séparé (8a, 8b), notamment en tant qu'antennes séparées pour les ondes radar, notamment en tant qu'éléments optiques séparés pour les ondes électromagnétiques dans le spectre visible, notamment en tant qu'élément de réception laser et élément d'émission laser séparés.

4. Banc d'essai (1) selon l'une des revendications 1 à 3, **caractérisé en ce que** la coulisse (6) et/ou la partie mobile (6m) de la coulisse (6) est conçue comme un élément en forme d'arc, en particulier en forme d'anneau de cercle ou de segment d'anneau de cercle, l'élément s'ouvre de manière concave vers le logement (5) du capteur de distance (2) à tester, en particulier la partie mobile (6m) de la coulisse (6) étant logée de manière mobile horizontalement le long de sa forme d'arc, en particulier le long de sa forme d'anneau circulaire ou de sa forme de segment d'anneau circulaire.

5. Banc d'essai (1) selon la revendication 4, **caractérisé en ce que** la coulisse (6) présente plusieurs parties mobiles (6m) qui sont conçues comme des éléments en forme d'arc, en particulier en forme d'anneau de cercle ou de segment d'anneau de cercle, superposés et mobiles les uns par rapport aux autres, en particulier les plusieurs parties mobiles de la coulisse ayant un axe de rotation commun, en particulier non figuratif.

6. Banc d'essai (1) selon la revendication 4 ou 5, **caractérisé en ce que** l'élément mobile (6m) en forme d'arc, notamment en forme d'anneau circulaire ou de segment d'anneau circulaire, est entraîné et dévié au moyen d'un entraînement par courroie (10).

7. Banc d'essai (1) selon l'une des revendications 1 à 6, **caractérisé en ce que** la coulisse (6) est recouverte d'un matériau absorbant (13) pour le rayonnement électromagnétique utilisé ou est réalisée dans un tel matériau dans les zones dans lesquelles aucun élément de réception (7) du banc d'essai et aucun élément de rayonnement (8) du banc d'essai n'est maintenu.

8. Banc d'essai (1) selon l'une des revendications 1 à 7, **caractérisé en ce qu'**il comprend un simulateur de réflexion (14), le simulateur de réflexion (14) étant relié à l'au moins un élément de réception de banc d'essai (7) et à l'au moins un élément de rayonnement de banc d'essai (8), qui sont disposés ensemble dans une partie mobile (6m) de la coulisse (6), le simulateur de réflexion (14) est conçu pour recevoir le signal d'émission (4) émis par le capteur de distance (2) à tester par l'intermédiaire de l'élément de réception du banc d'essai (7) et, sur la base d'informations de lieu et de mouvement fournies (xᵢ; vi ; ai) d'un objet d'environnement simulé (15) et de l'émettre par l'intermédiaire de l'élément d'émission du banc d'essai (8a, 8b ; 8c) en direction du capteur de distance (2) à tester.

9. Banc d'essai (1) selon la revendication 8, **caractérisé en ce que** l'élément de réception du banc d'essai (7) et/ou l'élément de rayonnement du banc d'essai (8) est relié au simulateur de réflexion (14) par un câble multiconducteur (16), un conducteur ou une partie de conducteur servant à l'alimentation en énergie du simulateur de réflexion (14). un conducteur sert à l'alimentation en énergie de l'élément de réception du banc d'essai (7) et/ou de l'élément de rayonnement du banc d'essai (8), un conducteur sert à la transmission d'un signal d'oscillateur du simulateur de réflexion (14) à l'élément de réception du banc d'essai (7) pour mélanger vers le bas en fréquence le signal d'émission reçu (4) du capteur de distance (2) à tester et pour mélanger vers le haut en fréquence un signal de réflexion à basse fréquence simulé par le simulateur de réflexion (14), et un conducteur servant à transmettre au simulateur de réflexion (14) le signal d'émission du capteur de distance (2) à tester, reçu dans l'élément de réception (7) du banc d'essai et mélangé vers le bas, respectivement de transmettre le signal de réflexion à basse fréquence (9) simulé et généré par le simulateur de réflexion (14) du simulateur de réflexion (14) à l'élément rayonnant du banc d'essai (8).

10. Banc d'essai (1) selon la revendication 8 ou 9, **caractérisé en ce que** le simulateur de réflexion (14) est relié par une technique de signalisation à un simulateur d'environnement (17) et le simulateur de réflexion (14) reçoit du simulateur d'environnement (17) des informations de lieu et de mouvement (xi, vi, a-) d'un objet d'environnement simulé (15) pour chaque paire fonctionnelle d'un élément de réception de banc d'essai (7a, 7b) et d'un élément de rayonnement de banc d'essai (8a, 8b), qui sont disposés ensemble dans une partie mobile (6m) de la coulisse (6).

11. Banc d'essai (1) selon l'une des revendications 1 à 10, **caractérisé en ce qu'**un actionneur (10) d'une paire (7a, 8a ; 7b, 8b) composé d'un élément de réception de banc d'essai (7a, 7b) et d'un élément de rayonnement de banc d'essai (8a, 8b) est relié au simulateur d'environnement (17) par une technique de signalisation et le simulateur d'environnement (17) fournit, à partir de la position relative simulée du capteur de distance (2) à tester par rapport à l'objet d'environnement simulé (15) respectivement associé, des informations de position et de mouvement de la paire (7a, 8a ; 7b, 8b) de l'élément de réception du banc d'essai (7a, 7b) et de l'élément de rayonnement du banc d'essai (8a, 8b) et commande l'entraînement (10) en conséquence pour réaliser les informations de position et de mouvement calculées.
